(19) Europäisches Patentamt
European Patent Office
Office européen des brevets

(11) **EP 4 436 278 A1**

(12) **EUROPEAN PATENT APPLICATION**
published in accordance with Art. 153(4) EPC

(43) Date of publication:
**25.09.2024 Bulletin 2024/39**

(21) Application number: **21964349.1**

(22) Date of filing: **17.11.2021**

(51) International Patent Classification (IPC):
***H04W 72/02*** (2009.01)

(52) Cooperative Patent Classification (CPC):
**H04W 72/02**

(86) International application number:
**PCT/CN2021/131296**

(87) International publication number:
**WO 2023/087186 (25.05.2023 Gazette 2023/21)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.
Beijing 100085 (CN)**

(72) Inventor: **CHI, Liangang
Beijing 100085 (CN)**

(74) Representative: **Kudlek, Franz Thomas
Dehns Germany
Theresienstraße 6-8
80333 München (DE)**

(54) **CHANNEL MEASUREMENT METHOD AND APPARATUS THEREFOR**

(57) The embodiments of the present disclosure provide a method and an apparatus for channel measurement. The terminal device performs measurement on a configured time-frequency resource, to obtain an unavailable bandwidth in communication, thereby providing accurate information of channel quality for base station scheduling.

Obtain one or more unavailable subbands in a plurality of subbands in a time-frequency resource — S21

Transmit indication information to a network device, where the indication information is configured to report the one or more unavailable subbands to the network device — S22

FIG. 2

**EP 4 436 278 A1**

**Description**

**TECHNICAL FIELD**

The present disclosure relates to the field of communication technology, and in particular to methods and apparatuses for channel measurement.

**BACKGROUND**

With the development of wireless communication technology, resources of low-band wireless spectrum are gradually being exhausted, and the development and utilization of high-band millimeter waves and even terahertz communication technologies become an inevitable trend. However, a propagation loss in a terahertz band is relatively severe, and a small change in transmission distance can greatly affect the characteristic of large-scale transmission of a channel, resulting in different available bandwidths for users at different distances. At present, there is a lack of effective means to measure and feedback an unavailable bandwidth in terahertz communication.

**SUMMARY**

The embodiments of the present disclosure provide a method and an apparatus for channel measurement. A terminal device performs measurement on a configured time-frequency resource, to obtain an unavailable bandwidth in communication, thereby providing accurate information of channel quality for base station scheduling.

In a first aspect, the embodiments of the present disclosure provide a method for channel measurement, where the method is performed by a terminal device, and includes: obtaining one or more unavailable subbands in a plurality of subbands in a time-frequency resource; and transmitting indication information to a network device, where the indication information is configured to report the one or more unavailable subbands to the network device.

The embodiments of the present disclosure provide a method for channel measurement. The terminal device performs measurement on a configured time-frequency resource, to obtain an unavailable bandwidth in communication, thereby providing accurate information of channel quality for base station scheduling.

In a second aspect, the embodiments of the present disclosure provide a method for channel measurement, where the method is performed by a network device, and includes: transmitting reference signals for measurement and receiving indication information transmitted by a terminal device, where the indication information indicates one or more unavailable subbands in a plurality of subbands in a frequency-domain resource, where the one or more unavailable subbands is determined by the terminal device.

The embodiments of the present disclosure provide a method for channel measurement. The reference signals transmitted by the terminal device are received, to obtain an unavailable bandwidth in communication, thereby providing accurate information of channel quality for base station scheduling.

In a third aspect, the embodiments of the present disclosure provide a communication apparatus that has the ability to implement some or all of the functions of the terminal device in the method described in the first aspect. For example, the communication apparatus can have some or all of the functions in the embodiments of the present disclosure, or can have the function of separately implementing any one of the embodiments in the present disclosure. The functions described can be implemented through hardware or by executing corresponding software through hardware. The hardware or software includes one or more units or modules corresponding to the above functions.

In an embodiment, the structure of the communication apparatus may include a transceiver module and a processing module, where the processing module is configured to support the communication apparatus in executing the corresponding functions in the above method. The transceiver module is configured to support communication between the communication apparatus and other devices. The communication apparatus may further include a storage module. The storage module is configured to couple with the transceiver module and the processing module. The storage module stores a necessary computer program and data for the communication apparatus.

As an example, the processing module can be a processor, the transceiver module can be a transceiver or communication interface, and the storage module can be a memory.

In a fourth aspect, the embodiments of the present disclosure provide a communication apparatus that has the ability to implement some or all of the functions of the network device in the method described in the second aspect. For example, the communication apparatus can have some or all of the functions in the embodiments of the present disclosure, or can have the function of separately implementing any one of the embodiments in the present disclosure. The functions described can be implemented through hardware or by executing corresponding software through hardware. The hardware or software includes one or more units or modules corresponding to the above functions.

In an embodiment, the structure of the communication apparatus may include a transceiver module and a processing module, where the processing module is configured to support the communication apparatus in executing the corresponding functions in the above method. The transceiver module is configured to support communication between the communication apparatus and other devices. The communication apparatus may further include a storage module. The storage module is configured to couple with the transceiver module and the processing module. The storage module stores a necessary computer program and data for the communication apparatus.

As an example, the processing module can be a processor, the transceiver module can be a transceiver or communication interface, and the storage module can be a memory.

In a fifth aspect, the embodiments of the present disclosure provide a communication device including one or more processors, where when the one or more processors call a computer program stored in one or more memories, the method described in the first aspect is executed.

In a sixth aspect, the embodiments of the present disclosure provide a communication device including one or more processors, where when the one or more processors call a computer program stored in one or more memories, the method described in the second aspect is executed.

In a seventh aspect, the embodiments of the present disclosure provide a communication device, including one or more processors and one or more memories, where a computer program is stored in the one or more memories, and the one or more processors execute the computer program stored in the one or more memories to enable the communication device to execute the method described in the first aspect.

In an eighth aspect, the embodiments of the present disclosure provide a communication device, including one or more processors and one or more memories, where a computer program is stored in the one or more memories, and the one or more processors execute the computer program stored in the one or more memories to enable the communication device to execute the method described in the second aspect.

In a ninth aspect, the embodiments of the present disclosure provide a communication device, including one or more processors and an interface circuit; where the interface circuit is configured to receive code instructions and transmit the code instructions to the one or more processors; and the one or more processors are used to run the code instructions to execute the method described in the first aspect.

In a tenth aspect, the embodiments of the present disclosure provide a communication device, including one or more processors and an interface circuit; where the interface circuit is configured to receive code instructions and transmit the code instructions to the one or more processors; and the one or more processors are used to run the code instructions to execute the method described in the second aspect.

In an eleventh aspect, the embodiments of the present disclosure provide a communication system including the communication apparatus as described in the third aspect and the communication apparatus as described in the fourth aspect, or including the communication device as described in the fifth aspect and the communication device as described in the sixth aspect, or including the communication device as described in the seventh aspect and the communication device as described in the eighth aspect, or including the communication device as described in the ninth aspect and the communication device as described in the tenth aspect.

In a twelfth aspect, the embodiments of the present disclosure provide a computer-readable storage medium storing instructions used by the terminal device, where when the instructions are executed, the terminal device executes the method described in the first aspect.

In a thirteenth aspect, the embodiments of the present disclosure provide a readable storage medium storing instructions used by the network device, where when the instructions are executed, the network device executes the method described in the second aspect.

In a fourteenth aspect, the present disclosure further provides a computer program product including a computer program, where when the computer program runs on a computer, the computer executes the method described in the first aspect.

In a fifteenth aspect, the present disclosure further provides a computer program product including a computer program, where when the computer program runs on a computer, the computer executes the method described in the second aspect.

In a sixteenth aspect, the present disclosure provides a chip system including one or more processors and an interface to support the terminal device in implementing the functions involved in the first aspect, such as determining or processing at least one of data or information involved in the above method. In some embodiments, the chip system further includes one or more memories for storing a computer program and data necessary for the terminal device. The chip system can be composed of one or more chips or include one or more chips and other discrete devices.

In a seventeenth aspect, the present disclosure provides a chip system including one or more processors and an interface to support the network device in implementing the functions involved in the second aspect, such as determining or processing at least one of data or information involved in the above method. In some embodiments, the chip system further includes one or more memories for storing a computer program and data necessary for the network device. The chip system can be composed of one or more chips or include one or more chips and other discrete devices.

In an eighteenth aspect, the present disclosure provides a computer program, where when the computer program runs on a computer, the computer executes the method described in the first aspect.

In a nineteenth aspect, the present disclosure provides a computer program, where when the computer program runs on a computer, the computer executes the method described in the second aspect.

## BRIEF DESCRIPTION OF DRAWINGS

In order to provide a clearer explanation of technical solutions in the embodiments or background technology of the present disclosure, accompanying drawings used in the embodiments or background technology of the present disclosure will be explained below.

FIG. 1 is a schematic diagram of an architecture of a communication system according to embodiments of the present disclosure.

FIG. 2 is a schematic flowchart of a method for channel measurement according to embodiments of the present disclosure.

FIG. 3 is a schematic diagram of a propagation loss of signals in a terahertz band.

FIG. 4 is a schematic flowchart of a method for channel measurement according to embodiments of the present disclosure.

FIG. 5 is a schematic flowchart of a method for channel measurement according to embodiments of the present disclosure.

FIG. 6 is a schematic flowchart of a method for channel measurement according to embodiments of the present disclosure.

FIG. 7 is a schematic flowchart of a method for channel measurement according to embodiments of the present disclosure.

FIG. 8 is a schematic flowchart of a method for channel measurement according to embodiments of the present disclosure.

FIG. 9 is a schematic flowchart of a method for channel measurement according to embodiments of the present disclosure.

FIG. 10 is a schematic flowchart of a method for channel measurement according to embodiments of the present disclosure.

FIG. 11 is a schematic flowchart of a method for channel measurement according to embodiments of the present disclosure.

FIG. 12 is a schematic flowchart of a method for channel measurement according to embodiments of the present disclosure.

FIG. 13 is a schematic flowchart of a method for channel measurement according to embodiments of the present disclosure.

FIG. 14 is a schematic flowchart of a method for channel measurement according to embodiments of the present disclosure.

FIG. 15 is a schematic flowchart of a method for channel measurement according to embodiments of the present disclosure.

FIG. 16 is a schematic flowchart of a method for channel measurement according to embodiments of the present disclosure.

FIG. 17 is a schematic diagram of an apparatus for channel measurement according to embodiments of the present disclosure.

FIG. 18 is a schematic structural diagram of a communication device according to embodiments of the present disclosure.

FIG. 19 is a schematic structural diagram of a chip according to embodiments of the present disclosure.

## DETAILED DESCRIPTION

Embodiments will be described in detail here with the examples thereof expressed in the drawings. When the following descriptions involve the drawings, like numerals in different drawings represent like or similar elements unless stated otherwise. Embodiments described in the illustrative examples below are not intended to represent all embodiments consistent with the present disclosure. Rather, they are merely embodiments of devices and methods consistent with some aspects of the present disclosure as recited in the appended claims.

It can be understood that in the present disclosure, "a plurality of" refers to two or more, similar to other quantifiers. The term "and/or" is only a description of the association relationship of associated objects, indicating that there can be three types of relationships, such as, A and/or B can represent three situations of A alone, A and B simultaneously, and B alone. The character "/" generally indicates that the associated objects before and after "/" are in an "or" relationship. The singular forms "a", "an" and "the" are intended to include the plural forms as well, unless the context clearly indicates otherwise.

It shall be understood that, although the terms "first," "second," "third," and the like may be used herein to describe various information, the information should not be limited by these terms. These terms are only used to distinguish the same type of information from each other. For example, without departing from the scope of the present disclosure, first information may be referred as second information; and similarly, second information may also be referred as first information. As used herein, the term "if" and "in case" may be interpreted as "when" or "upon" or "in response to determining" depending on the context.

For ease of understanding, terms involved in the present disclosure are first explained below.

1. Channel

Channel is a lane through which signals are transmitted in a communication system, is a transmission medium through which signals are transmitted from a sender to a recipient, and can be divided into three categories: wired channel, wireless channel, and storage channel.

2. Subband

Subband, also known as sub frequency band, is formed by converting original signals from the time domain to the frequency domain and splitting the frequency band, and the subband is a part of a frequency band that has specific characteristics.

In order to better understand the method for channel measurement disclosed in the embodiments of the present disclosure, the following will first describe the communication system applicable to the embodiments of the present disclosure.

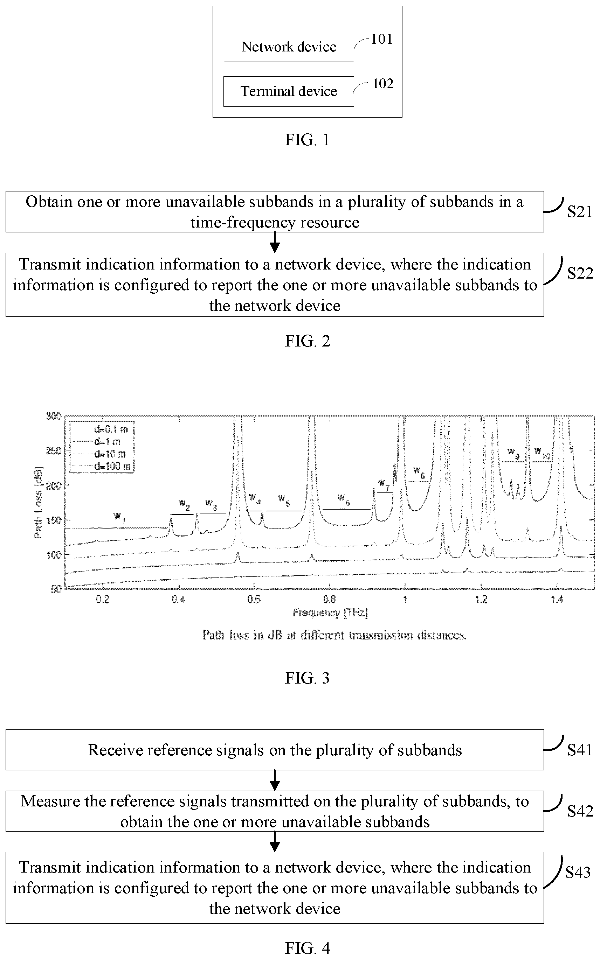

Referring to FIG. 1, FIG. 1 is a schematic diagram of an architecture of a communication system according to embodiments of the present disclosure. The communication system may include but is not limited to a network device and a terminal device. The number and form of devices shown in FIG. 1 are only for example and do not constitute a limitation on the embodiments of the present disclosure. In practical applications, the communication system may include two or more network devices, or two or more terminal devices. The communication system shown in FIG. 1 includes a network device 101 and a terminal device 102 as an example.

It should be noted that the technical solution of the embodiments of the present disclosure can be applied to various communication systems, such as a long term evolution (LTE) system, a 5th generation (5G) mobile communication system, a 5G new radio (NR) system, or other future new mobile communication systems.

The network device 101 in the embodiments of the present disclosure is an entity for transmitting or receiving signals on the network side. For example, the network device 101 can be an evolved NodeB (eNB), a transmission reception point (TRP), a next generation NodeB (gNB) in an NR system, base stations in other future mobile communication systems, or access nodes in wireless fidelity (WiFi) systems. The embodiments of the present disclosure do not limit the specific technology or specific device form adopted by the network device. The network device provided in the embodiments of the present disclosure can be composed of a central unit (CU) and a distributed unit (DU), where the CU can also be referred to as a control unit. The network device (such as a protocol layer of the base station) can be separated by the CU-DU structure, where some functions of the protocol layer are distributed in the CU and centrally controlled, and a part of or all of the remaining functions of the protocol layer are distributed in the DU, where the DU is centrally controlled by the CU.

The terminal device 102 in the embodiments of the present disclosure is an entity for receiving or transmitting signals on the user side, such as a mobile phone. The terminal device can also be referred to as a terminal, a user equipment (UE), a mobile station (MS), or a mobile terminal (MT). The terminal device can include a car, a smart car, a mobile phone, a wearable device, a pad, a computer with a wireless transmission and reception capability, a virtual reality (VR) terminal device, an augmented reality (AR) terminal device, a wireless terminal device in industrial control, a wireless terminal device in self driving, a wireless terminal device in remote medical surgery, a wireless terminal device in smart grid, a wireless terminal device in transportation security, a wireless terminal device in smart city, or a wireless terminal device in smart home, that has a communication capability. The embodiments of the present disclosure do not limit the specific technology or specific device form adopted by the terminal device.

It can be understood that the communication system described in the embodiments of the present disclosure is intended to provide a clearer explanation of the technical solutions in the embodiments of the present disclosure, and does not constitute a limitation on the technical solutions provided in the embodiments of the present disclosure. As those skilled in the art know, with the evolution of the system architecture and the emergence of new business scenarios, the technical solutions provided in the embodiments of the present disclosure are also applicable to similar technical problems.

It can be understood that the multiple solutions in the embodiments of the present disclosure can be implemented separately or in combination, which is not limited in the present disclosure.

The method and apparatus for channel measurement provided in the present disclosure will be introduced in detail below with reference to the accompanying drawings.

FIG. 2 is a schematic flowchart of a method for channel measurement according to embodiments of the present disclosure. The method is performed by a terminal device. As shown in FIG. 2, the method includes steps S21 and S22.

In step S21, one or more unavailable subbands in a plurality of subbands in a time-frequency resource are obtained.

As shown in FIG. 3, a propagation loss of signals in a terahertz band is relatively severe, resulting in different available bandwidths for users at different distances. In this embodiment, the terminal device measures signals in a time-frequency resource to obtain an unavailable bandwidth in communication.

In this embodiment, a resource unit subband in a time-frequency domain is defined. For example, one subband includes M resource blocks (RBs), and one resource block includes N orthogonal frequency division multiplexing (OFDM) subcarriers.

In some embodiments, a reference signal is configured, and a received reference signal is measured to obtain an unavailable subband in the plurality of subbands.

Optionally, reference signals can be received in multiple subbands at different positions in the frequency domain, and reference signals can be received in a subband at different times.

In step S22, indication information is transmitted to a network device, where the indication information is configured to report the one or more unavailable subbands to the network device.

Optionally, the terminal device generates the indication information according to the unavailable subband or generates indication information according to an available subband, and transmits the indication information to the network device. In some embodiments, the indication information can be explicitly indicated. For example, a starting subband number of unavailable subbands and the number of unavailable subbands can be directly reported. In other embodiments, the indication information can also be implicitly indicated. For example, characterization information of unavailable subbands can be reported, such as a resource indication value of unavailable subbands.

The embodiments of the present disclosure provide a method for channel measurement. The terminal device performs measurement on a configured time-frequency resource, to obtain an unavailable bandwidth in communication, thereby providing accurate information of channel quality for base station scheduling.

FIG. 4 is a schematic flowchart of a method for channel measurement according to embodiments of the present disclosure. The method is performed by a terminal device. As shown in FIG. 4, the method includes steps S41 to S43.

In step S41, reference signals on the plurality of subbands are received.

Optionally, the network device can simultaneously transmit reference signals to the terminal device in the plurality of subbands, alternatively, the network device can transmit reference signals to the terminal device at different times in the plurality of subbands. According to a transmitting manner of the reference signals, optionally, the terminal device can simultaneously receive the reference signals transmitted respectively in the plurality of subbands, or receive, at different times, the reference signals transmitted respectively in the plurality of subbands.

The reference signal can be a cell reference signal (CRS), a channel state information reference signal (CSI-RS), a demodulation reference signal (DRS), an uplink sounding reference signal (SRS), or a demodulation reference signal (DMRS).

In step S42, the reference signals transmitted on the plurality of subbands are measured, to obtain the one or more unavailable subbands.

The received reference signals are measured to obtain the measurement results of the reference signals. The measurement results can reflect the qualities of the subbands. In the present disclosure, according to the measurement results of the reference signals, one or more unavailable subbands can be determined from the plurality of subbands. Optionally, one or more available subbands can also be determined from the plurality of subbands according to the measurement results of the reference signals. The quality of the unavailable subband is poorer, and the quality of the available subband is better.

For example, there can be a set threshold, and when a measurement result of a reference signal is lower than the set threshold, the subband that transmits the reference signal is an unavailable subband.

In step S43, indication information is transmitted to a network device, where the indication information is configured to report the one or more unavailable subbands to the network device.

The embodiment of step S43 can be found in the relevant description in the embodiments of the present disclosure, and will not be elaborated here.

The embodiments of the present disclosure provide a method for channel measurement that obtains unavailable bandwidth in communication by measuring a reference signal.

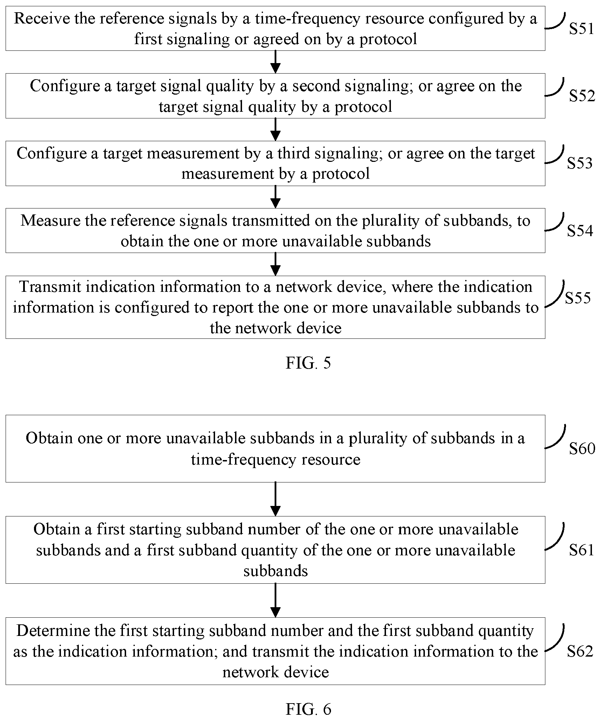

FIG. 5 is a schematic flowchart of a method for channel measurement according to embodiments of the present disclosure. The method is performed by a terminal device. As shown in FIG. 5, the method includes steps S51 to S55.

In step S51, the reference signals are received by a time-frequency resource configured by a first signaling or agreed on by a protocol.

The network device indicates the time-frequency resource for measuring the reference signals to the terminal device through the first signaling, and transmits the reference signals on the configured time-frequency resource.

In step S52, a target signal quality is configured by a second signaling; or the target signal quality is agreed on by a protocol.

The network device configures the target signal quality to the terminal device through the second signaling, and the terminal device compares the configured target signal quality with the quality of a received reference signal.

The target signal quality is the minimum signal quality that the terminal device can accept. For comparison, the target signal quality includes various measured values of a signal.

In step S53, a target measurement is configured by a third signaling; or the target measurement is agreed on by a protocol.

The network device indicates the target measurement to the terminal device through the third signaling, where the target measurement includes at least one of: reference signal receiving power (RSRP); reference signal receiving quality (RSRQ); signal to interference plus noise ratio (SINR); or received signal strength indication (RSSI).

Reference Signal Receiving Power (RSRP) is one of requirements for physical layer measurement and a key parameter representing wireless signal strength in a Long Term Evolution (LTE) network. The RSRP is an average of signal power received by all resource particles carrying the reference signals on the measurement frequency bandwidth.

Received Signal Strength Indication (RSSI) is an optional part of the wireless transmission layer used to determine link quality and whether to increase broadcast transmission strength.

Reference Signal Receiving Quality (RSRQ) is defined as the ratio of N * RSRP/(transmitting carrier RSSI), where N is the number of resource blocks (RBs) for transmitting carrier RSSI in measurement bandwidth(s). RSRQ achieves an effective way to report a combination of the signal strength and interference.

Signal to Interference plus Noise Ratio (SINR) refers to the ratio of the strength of the received useful signal to the strength of the received interference signal, which can be simply understood as the signal-to-noise ratio.

In step S54, the reference signals transmitted on the plurality of subbands are measured, to obtain the one or more unavailable subbands.

The reference signals are measured according to the target measurement configured by the third signaling, for example, when the target measurement is RSRP, the RSRP of the reference signal is measured. When the target measurement is RSRQ and SINR, the RSRQ and SINR of the reference signal are measured.

The target measurement of the reference signals on the plurality of subbands is obtained, to determine one or more target subbands, where the value of the target measurement of the target subband is less than a target signal quality, where the target subband is an unavailable subband.

In step S55, indication information is transmitted to a network device, where the indication information is configured to report the one or more unavailable subbands to the network device.

The embodiment of step S55 can be found in the relevant description in the embodiments of the present disclosure, and will not be elaborated here.

The embodiments of the present disclosure provide a method for channel measurement, where the transmission and measurement standards of reference signals are configured through signaling, laying a determining foundation for obtaining unavailable bandwidths.

FIG. 6 is a schematic flowchart of a method for channel measurement according to embodiments of the present disclosure. The method is performed by a terminal device. As shown in FIG. 6, the method includes steps S60 to S62.

In step S60, one or more unavailable subbands in a plurality of subbands in a time-frequency resource are obtained.

The embodiment of step S60 can be found in the relevant description in the embodiments of the present disclosure, and will not be elaborated here.

In step S61, a first starting subband number of the one or more unavailable subbands and a first subband quantity of the one or more unavailable subbands are obtained.

The configured plurality of subbands have subband numbers. Optionally, the subband numbers start from 0, and increases from low to high in the frequency domain of the subbands or increases from high to low in the frequency domain of the subbands.

Because the unavailable subbands are generally continuous multiple subbands, the first starting subband number of the unavailable subbands and the first subband quantity of unavailable subbands can be obtained. For example, if unavailable subbands are subbands with subband numbers 8, 9, and 10, then the first starting subband number is 8 and the first subband quantity is 3.

When the unavailable subbands are discontinuous subbands, multiple sets of the first subband starting numbers and the first subband quantity can be obtained. For example, when the subband numbers of the unavailable subbands are 6, 7, 8, 10, 11, the first starting subband number of the first set is 6, the first subband quantity of the first set is 3, the first starting subband number of the second set is 10, and the first subband quantity of the second set is 2.

In step S62, the first starting subband number and the first subband quantity are determined as the indication information; and the indication information is transmitted to the network device.

Optionally, the terminal device directly transmits the first starting subband number and the first subband quantity as the indication information to the network device.

The embodiments of the present disclosure provide a method for channel measurement, where the first starting subband number and the first subband quantity are taken as the indication information, to report the one or more unavailable subbands to the network device.

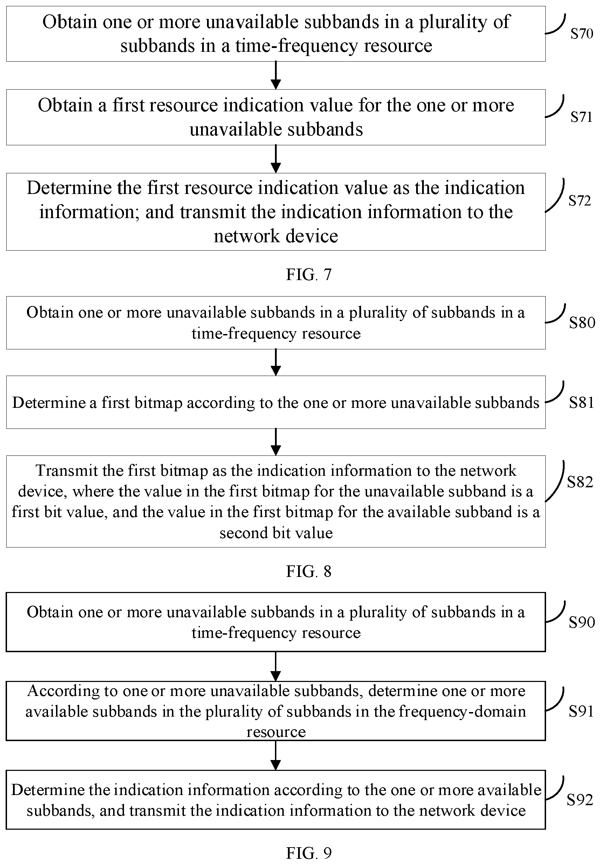

FIG. 7 is a schematic flowchart of a method for channel measurement according to embodiments of the present disclosure. The method is performed by a terminal device. As shown in FIG. 7, the method includes steps S70 to S72.

In step S70, one or more unavailable subbands in a plurality of subbands in a time-frequency resource are obtained.

The embodiment of step S70 can be found in the relevant description in the embodiments of the present disclosure, and will not be elaborated here.

In step S71, a first resource indication value for the one or more unavailable subbands is obtained.

In the present disclosure, according to the measurement for the reference signals, unavailable subbands are determined from the plurality of subbands, and the first starting subband number and the first subband quantity of the unavailable subbands are obtained. Furthermore, a second subband quantity of subbands in a measurement bandwidth is obtained, where the second subband quantity is the number of all subbands included in the measurement bandwidth. The second subband quantity can be agreed on by a protocol or configured on the network side.

Optionally, the first resource indication value of the unavailable subbands is obtained according to the first starting subband number and the first subband quantity of the unavailable subbands, and the second subband quantity.

The first subband quantity is greater than or equal to 1 and less than a difference between the second subband quantity and the first starting subband number.

Arithmetic operations can be performed on the first starting subband number, the first subband quantity, and the second subband quantity to determine the first resource indication value.

Half of the second subband quantity is rounded down to obtain a first value. When the second subband quantity is even, the first value is half of the second subband quantity. When the second subband quantity is odd, the first value is an integer value of half of the second subband quantity.

Furthermore, a first difference between the first subband quantity and 1 can be obtained, and the first resource indication value is determined according to the first value, the first difference, and the first starting subband number.

In response to determining that a second value is less than or equal to the first difference, a first product of the first value and the first difference is obtained, and a first sum of the first product and the first starting subband number is obtained as the first resource indication value.

In response to determining that the second value is greater than the first difference, a second difference between the second subband quantity and the first value is obtained, and a second product of the second difference and the second subband quantity is obtained. A third difference between second subband quantity and 1 is obtained, and a fourth difference between third difference and first starting subband number is obtained. A second sum of the second product and the fourth difference is obtained as the first resource indication value.

$$\text{If } (L_{SBs} - 1) \leq \left\lfloor N_{BW}^{size}/2 \right\rfloor, \quad RIV = N_{BW}^{size}(L_{SBs} - 1) + SB_{start}.$$

$$\text{If } (L_{SBs} - 1) > \left\lfloor N_{BW}^{size}/2 \right\rfloor, \quad RIV = N_{BW}^{size}(N_{BW}^{size} - L_{SBs} + 1) + (N_{BW}^{size} - 1 - SB_{start}).$$

$SB_{start}$ indicates the first starting subband number, $L_{SBs}$ indicates the first subband quantity, and $N_{BW}^{size}$ indicates the second subband quantity.

In step S72, the first resource indication value is determined as the indication information; and the indication information is transmitted to the network device.

Optionally, the terminal device takes the first resource indication value of the unavailable subbands as the indication information and transmits the indication information to the network device.

The embodiments of the present disclosure provide a method for channel measurement, where a first resource indication value is determined, such that the indication information can be generated according to the first resource indication value.

FIG. 8 is a schematic flowchart of a method for channel measurement according to embodiments of the present disclosure. The method is performed by a terminal device. As shown in FIG. 8, the method includes steps S80 to S82.

In step S80, one or more unavailable subbands in a plurality of subbands in a time-frequency resource are obtained.

The embodiment of step S80 can be found in the relevant description in the embodiments of the present disclosure, and will not be elaborated here.

In step S81, a first bitmap is determined according to the one or more unavailable subbands.

The first bitmap contains a bit sequence, where each subband corresponds to a bit, and optionally, the sequence numbers of bits in the bit sequence correspond to the subband numbers.

In some embodiments, a subband with a corresponding bit of 0 indicates that the subband is an unavailable subband, and a subband with a corresponding bit of 1 indicates that the subband is an available subband.

In some embodiments, a subband with a corresponding bit of 1 indicates that the subband is an unavailable subband, and a subband with a corresponding bit of 0 indicates that the subband is an available subband.

In step S82, the first bitmap is transmitted as the indication information to the network device, where the value in the first bitmap for the unavailable subband is a first bit value, and the value in the first bitmap for the available subband is a second bit value.

Optionally, the terminal device takes the first bitmap of the unavailable subbands as the indication information and transmits the indication information to the network device. In the first bitmap, the value for the unavailable subband is a first bit value, and the value for the available subband is a second bit value.

The embodiments of the present disclosure provide a method for channel measurement, where the first bitmap is taken as the indication information, to report the one or more unavailable subbands to the network device.

FIG. 9 is a schematic flowchart of a method for channel measurement according to embodiments of the present disclosure. The method is performed by a terminal device. As shown in FIG. 9, the method includes steps S90 to S92.

In step S90, one or more unavailable subbands in a plurality of subbands in a time-frequency resource are obtained.

The embodiment of step S90 can be found in the relevant description in the embodiments of the present disclosure, and will not be elaborated here.

In step S91, according to one or more unavailable subbands, one or more available subbands in the plurality of subbands in the frequency-domain resource are determined.

The unavailable subbands in the plurality of subbands are obtained, and the remaining subbands are the available subbands in the plurality of subbands.

In step S92, the indication information is determined according to the one or more available subbands, and the indication information is transmitted to the network device.

In some embodiments, a second starting subband number of the available subbands and a third subband quantity of the available subbands are obtained, the second starting subband number and the third subband quantity are determined as the indication information, and the indication information is transmitted to the network device.

In some embodiments, a second resource indication value for the available subbands is obtained; the second resource indication value is determined as the indication information; and the indication information is transmitted to the network device.

In some embodiments, a second bitmap is generated according to the available subbands, and the second bitmap is transmitted as the indication information to the network device, where in the second bitmap, the value for the unavailable subband is a third bit value, and the value for the available subband is a fourth bit value.

The embodiments of the present disclosure provide a method for channel measurement, where the available subbands in the plurality of subbands are detemined according to unavailable subbands, such that the available subbands can be reported to the network device, which is another way to improve channel quality.

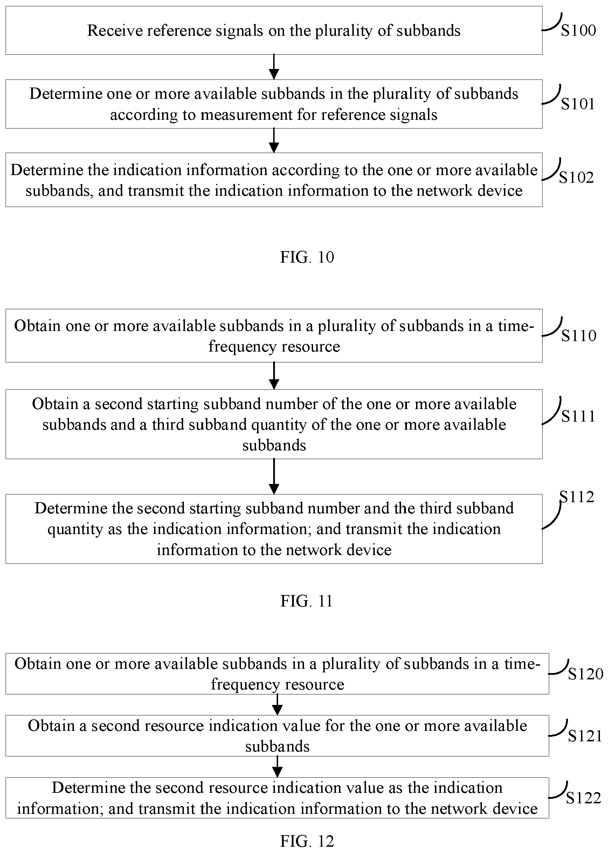

FIG. 10 is a schematic flowchart of a method for channel measurement according to embodiments of the present disclosure. The method is performed by a terminal device. As shown in FIG. 10, the method includes steps S100 to S 102.

In step S100, reference signals on the plurality of subbands are received.

The embodiment of step S100 can be found in the relevant description in the embodiments of the present disclosure, and will not be elaborated here.

In step S101, one or more available subbands in the plurality of subbands are determined according to measurement for reference signals.

The target measurement of the reference signals on the plurality of subbands is obtained, to determine a target subband, where a value of the target measurement of the target subband is greater than a target signal quality, where the target subband is an available subbands.

In step S102, the indication information is determined according to the one or more available subbands, and the indication information is transmitted to the network device.

In some embodiments, a second starting subband number of the available subbands and a third subband quantity of the available subbands are obtained, the second starting subband number and the third subband quantity are determined as the indication information, and the indication information is transmitted to the network device.

In some embodiments, a second resource indication value for the available subbands is obtained; the second resource indication value is determined as the indication information; and the indication information is transmitted to the network device.

In some embodiments, a second bitmap is generated according to the available subbands, and the second bitmap is transmitted as the indication information to the network device, where in the second bitmap, the value for the unavailable subband is a third bit value, and the value for the available subband is a fourth bit value.

The embodiments of the present disclosure provide a method for channel measurement, where the available subbands in the plurality of subbands are detemined according to the measurement for the reference signals, such that the available subbands can be reported to network devices, which is another way to improve channel quality.

FIG. 11 is a schematic flowchart of a method for channel measurement according to embodiments of the present disclosure. The method is performed by a terminal device. As shown in FIG. 11, the method includes steps S110 to S112.

In step S110, one or more available subbands in a plurality of subbands in a time-frequency resource are obtained.

According to the unavailable subbands, the available subbands in the plurality of subbands in the frequency-domain resource are determined, or according to the measurement of reference signals, the available subbands in the plurality of subbands are determined.

In step S 111, a second starting subband number of the one or more available subbands and a third subband quantity of the one or more available subbands are obtained.

The configured plurality of subbands have subband numbers. Optionally, the subband numbers start from 0, and increases from low to high in the frequency domain of the subbands or increases from high to low in the frequency domain of the subbands.

Because the available subbands are generally continuous multiple subbands, the second starting subband number of the available subbands and the third subband quantity of the available subbands can be obtained. For example, if available subbands are subbands with subband numbers 0, 1, and 2, then the second starting subband number is 0 and the third subband quantity is 3.

When the available subbands are discontinuous subbands, multiple sets of the second subband starting numbers and the third subband quantitys can be obtained. For example, when the subband numbers of the available subbands are 0, 1, 2, 4, 5, the second starting subband number of the first set is 0, the third subband quantity of the first set is 3, the second starting subband number of the second set is 4, and the third subband quantity of the second set is 2.

In step S 112, the second starting subband number and the third subband quantity are determined as the indication information; and the indication information is transmitted to the network device.

Optionally, the terminal device directly transmits the second starting subband number and the third subband quantity as the indication information to the network device.

The embodiments of the present disclosure provide a method for channel measurement, where the second starting subband number and the third subband quantity are taken as the indication information, to report the one or more available subbands to the network device.

FIG. 12 is a schematic flowchart of a method for channel measurement according to embodiments of the present disclosure. The method is performed by a terminal device. As shown in FIG. 12, the method includes steps S120 to S 122.

In step S120, one or more available subbands in a plurality of subbands in a time-frequency resource are obtained.

The embodiment of step S 120 can be found in the relevant description in the embodiments of the present disclosure, and will not be elaborated here.

In step S121, a second resource indication value for the one or more available subbands is obtained.

In the present disclosure, according to the measurement for the reference signals, one or more available subbands are determined from the plurality of subbands, and the second starting subband number and the third subband quantity of the one or more available subbands are obtained. Furthermore, a second subband quantity of subbands in a measurement bandwidth, where the second subband quantity is the number of all subbands included in the measurement bandwidth. The second subband quantity can be agreed on by a protocol or configured on the network side.

Optionally, the second resource indication value of the available subbands is obtained according to the second starting subband number of the available subbands, the third subband quantity, and the second subband quantity.

The third subband quantity is greater than or equal to 1 and less than a difference between the second subband quantity and the second starting subband number.

Arithmetic operations can be performed on the second starting subband number, the third subband quantity, and the second subband quantity to determine the second resource indication value.

The half of the second subband quantity is rounded down to obtain the first value, and a fifth difference between the third subband quantity and 1 is obtained, and the second resource indication value is determined according to the first value, the fifth difference, and the second starting subband number.

In response to determining that the second value is less than or equal to the fifth difference, a third product of the first value and the fifth difference is obtained, and a third sum of the third product and the second starting subband number is obtained as the second resource indication value.

In response to determining that the second value is greater than the fifth difference, a sixth difference between the second subband quantity and the first value is obtained, and a fourth product of the sixth difference and the second subband quantity is obtained. A seventh difference between the second subband quantity and 1 is obtained, and an eighth difference between the seventh difference and the second starting subband number is obtained. A fourth sum of the third product and the eighth difference is obtained as the second resource indication value.

$$\text{If } (L_{SBs} - 1) \le \left\lfloor N_{BW}^{size} / 2 \right\rfloor, \quad RIV = N_{BW}^{size}(L_{SBs} - 1) + SB_{start}.$$

$$\text{If } (L_{SBs} - 1) > \left\lfloor N_{BW}^{size} / 2 \right\rfloor, \quad RIV = N_{BW}^{size}(N_{BW}^{size} - L_{SBs} + 1) + (N_{BW}^{size} - 1 - SB_{start}).$$

$SB_{start}$ indicates the second starting subband number, $L_{SBs}$ indicates the third subband quantity, and $N_{BW}^{size}$ indicates the second subband quantity.

In step S122, the second resource indication value is determined as the indication information; and the indication information is transmitted to the network device.

Optionally, the terminal device takes the second resource indication value of the available subbands as the indication information and transmits the indication information to the network device.

The embodiments of the present disclosure provide a method for channel measurement, where a second resource indication value is determined, such that the indication information can be generated according to the second resource indication value.

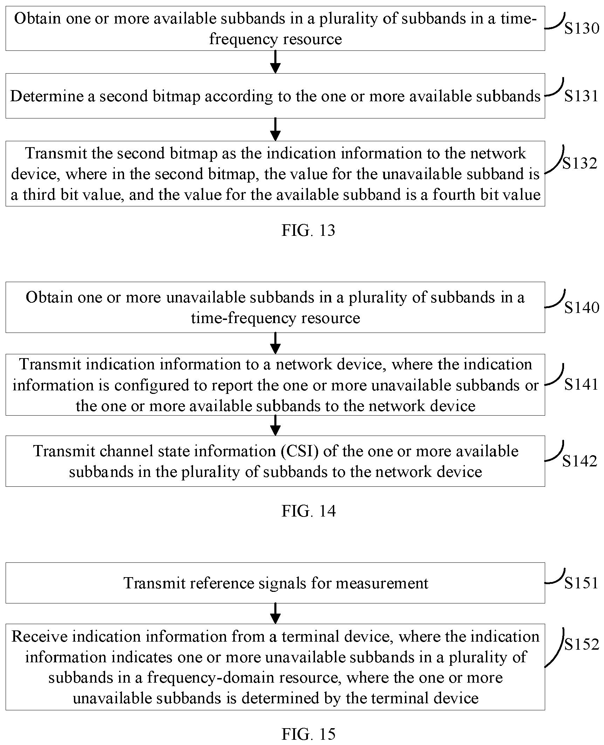

FIG. 13 is a schematic flowchart of a method for channel measurement according to embodiments of the present disclosure. The method is performed by a terminal device. As shown in FIG. 13, the method includes steps S130 to S132.

In step S130, one or more available subbands in a plurality of subbands in a time-frequency resource are obtained.

The embodiment of step S130 can be found in the relevant description in the embodiments of the present disclosure, and will not be elaborated here.

In step S131, a second bitmap is determined according to the one or more available subbands.

The second bitmap contains a bit sequence, where each subband corresponds to a bit, and optionally, the sequence numbers of bits in the bit sequence correspond to the subband numbers.

In some embodiments, a subband with a corresponding bit of 0 indicates that the subband is an unavailable subband, and a subband with a corresponding bit of 1 indicates that the subband is an available subband.

In some embodiments, a subband with a corresponding bit of 1 indicates that the subband is an unavailable subband, and a subband with a corresponding bit of 0 indicates that the subband is an available subband.

In step S132, the second bitmap is transmitted as the indication information to the network device, where in the second bitmap, the value for the unavailable subband is a third bit value, and the value for the available subband is a fourth bit value.

Optionally, the terminal device takes the second bitmap as the indication information and transmits the indication information to the network device. In the second bitmap, the value for the unavailable subband is a third bit value, and the value for the available subband is a fourth bit value.

The embodiments of the present disclosure provide a method for channel measurement, where the second bitmap is taken as the indication information, to report the one or more available subbands to the network device.

FIG. 14 is a schematic flowchart of a method for channel measurement according to embodiments of the present disclosure. The method is performed by a terminal device. As shown in FIG. 14, the method includes steps S140 to S142.

In step S140, one or more unavailable subbands in a plurality of subbands in a time-frequency resource are obtained.

In step S141, indication information is transmitted to a network device, where the indication information is configured to report the one or more unavailable subbands or the one or more available subbands to the network device.

The embodiments of steps S140 and S141 can be found in the relevant description in the embodiments of the present disclosure, and will not be elaborated here.

In step S142, channel state information (CSI) of the one or more available subbands in the plurality of subbands is transmitted to the network device.

The available subbands in the plurality of subbands can be obtained, or the available subbands can be obtained according to the unavailable subbands. Channel State Information (CSI) of the available subbands can be obtained and the CSI can be transmitted to the network device.

CSI is a channel attribute of a communication link. CSI describes an attenuation factor of a signal on each transmission path, i.e., a value of each element in a channel gain matrix H, such as signal scattering, environmental attenuation, distance attenuation, and other information. CSI can enable the communication system to adapt to a current channel condition, which ensures high-reliability and high-speed communication in a multi-antenna system.

The embodiments of the present disclosure provide a method for channel measurement that enables the network device to further understand the channel qualities of available subbands by transmitting CSI.

FIG. 15 is a schematic flowchart of a method for channel measurement according to embodiments of the present disclosure. The method is performed by a network device. As shown in FIG. 15, the method includes steps S151 to S152.

In step S151, reference signals for measurement are transmitted.

The reference signals for measurement are transmitted on the plurality of subbands to the terminal device, where the reference signals are used to determine the one or more unavailable subbands.

Optionally, reference signals can be simultaneously transmitted to the terminal device in the plurality of subbands, alternatively, reference signals can be transmitted to the terminal device at different times in the plurality of subbands.

In step S152, indication information from a terminal device is received, where the indication information indicates one or more unavailable subbands in a plurality of subbands in a frequency-domain resource, where the one or more unavailable subbands is determined by the terminal device.

The indication information can be explicitly indicated or implicitly indicated.

The embodiments of the present disclosure provide a method for channel measurement. The reference signals transmitted by the terminal device are received, to obtain an unavailable bandwidth in communication, thereby providing accurate information of channel quality for base station scheduling.

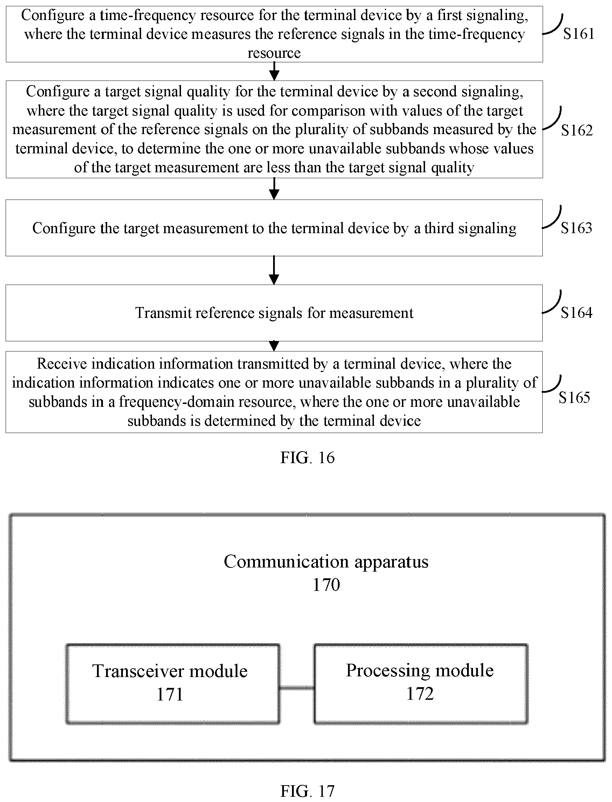

FIG. 16 is a schematic flowchart of a method for channel measurement according to embodiments of the present disclosure. The method is performed by a network device. As shown in FIG. 16, the method includes steps S161 to S165.

In step S161, a time-frequency resource is configured, by a first signaling, for the terminal device, where the terminal device measures the reference signals in the time-frequency resource.

In step S 162, a target signal quality is configured, by a second signaling, for the terminal device, where the target signal quality is used for comparison with values of the target measurement of the reference signals on the plurality of subbands measured by the terminal device, to determine the one or more unavailable subbands whose values of the target measurement are less than the target signal quality.

In step S163, the target measurement is configured, by a third signaling, to the terminal device.

The target measurement includes at least one of: reference signal receiving power, RSRP; reference signal receiving quality, RSRQ; signal to interference plus noise ratio, SINR; or received signal strength indication, RSSI.

In step S164, reference signals for measurement are transmitted.

Optionally, reference signals can be simultaneously transmitted to the terminal device in the plurality of subbands, alternatively, reference signals can be transmitted to the terminal device at different times in the plurality of subbands.

In step S165, indication information transmitted by a terminal device is received, where the indication information indicates one or more unavailable subbands in a plurality of subbands in a frequency-domain resource, where the one or more unavailable subbands is determined by the terminal device.

In some embodiments, the first starting subband number of the one or more unavailable subbands and the first subband quantity of the one or more unavailable subbands are received, where the first starting subband number and the first subband quantity are the indication information.

In some embodiments, the first resource indication value of the one or more unavailable subbands is received, where the first resource indication value is the indication information.

The first resource indication value is determined by the terminal device according to the first starting subband number of the one or more unavailable subbands, the first subband quantity of the one or more unavailable subbands, and a second subband quantity of subbands in a measurement bandwidth. The first subband quantity is greater than 1 and less than a difference between the second subband quantity and the first starting subband number.

In some embodiments, a first bitmap generated according to the one or more unavailable subbands is received, where the first bitmap is the indication information, where in the first bitmap, a value for the unavailable subband is a first bit value, and a value for the available subband is a second bit valuee.

In some embodiments, indication information transmitted by a terminal device is received, where the indication information indicates one or more available subbands in a plurality of subbands in a frequency-domain resource, where the one or more available subbands is determined by the terminal device.

In some embodiments, the second starting subband number of the one or more available subbands and the third subband quantity of the one or more available subbands are received, where the second starting subband number and the third subband quantity are the indication information.

In some embodiments, the second resource indication value of the one or more available subbands is received, where the second resource indication value is the indication information.

The second resource indication value is determined by the terminal device according to the second starting subband number of the one or more available subbands, the third subband quantity of the one or more unavailable subbands, and a second subband quantity of subbands in a measurement bandwidth. The third subband quantity is greater than 1 and less than a difference between the second subband quantity and the second starting subband number.

In some embodiments, a second bitmap is generated according to the available subbands, and the second bitmap is transmitted as the indication information to the network device, where in the second bitmap, the value for the unavailable subband is a third bit value, and the value for the available subband is a fourth bit value.

In some embodiments, indication information transmitted by a terminal device is received, where the indication information indicates one or more unavailable subbands in a plurality of subbands in a frequency-domain resource, where the one or more unavailable subbands are determined by the terminal device. Channel state information (CSI) of the one or more available subbands in the plurality of subbands is received, where the channel state information is transmitted by the terminal device.

In the embodiments provided in the present disclosure, the methods provided in the embodiments of the present disclosure are introduced from the perspectives of the network device and the terminal device. In order to achieve the various functions of the methods provided in the embodiments of the present disclosure, the network device and the terminal device may include hardware structures and software modules, and the functions are implemented in the form of hardware structures, software modules, or hardware structures plus software modules. One of the above functions can be executed in the form of hardware structure, software module, or hardware structure plus software module.

Referring to FIG. 17, FIG. 17 is a schematic structural diagram of a communication apparatus according to embodiments of the present disclosure. The communication apparatus 170 shown in FIG. 17 may include a transceiver module 171 and a processing module 172. The transceiver module 171 can include a transmitting module and a receiving module. The transmitting module is configured to achieve a transmitting function, the receiving module is configured to achieve a receiving function, and the transceiver module 171 can achieve the transmitting and receiving functions.

The communication apparatus 170 can be a terminal device, a device in the terminal device, or a device that can be matched and used with the terminal device. Alternatively, the communication apparatus 170 can be a network device, a device in a network device, or a device that can be matched and used with the network device.

The communication apparatus 170 is a terminal device, and includes:

A transceiver module 171, configured to transmit indication information to a network device, where the indication information is configured to report one or more unavailable subbands to the network device.

A processing module 172, configured to obtain one or more unavailable subbands in a plurality of subbands in a time-frequency resource.

Optionally, the transceiver module 171 is further configured to receive reference signals on the plurality of subbands.

Optionally, the processing module 172 is further configured to measure reference signals transmitted on the plurality of subbands, to obtain one or more unavailable subbands.

Optionally, the transceiver module 171 further configured to simultaneously receive the reference signals transmitted respectively in the plurality of subbands, or receive, at different times, the reference signals transmitted respectively in the plurality of subbands.

Optionally, the processing module 172 is further configured to transmit the reference signals by a time-frequency resource configured by a first signaling or agreed by a protocol.

Optionally, the processing module 172 is further configured to: obtain values of a target measurement of the reference signals on the plurality of subbands, to determine one or more target subbands, where a value of the target measurement of each of the one or more target subbands is less than a target signal quality, where the one or more target subbands are the one or more unavailable subbands.

Optionally, the processing module 172 is further configured to configure, by a second signaling, the target signal quality; or agree, by a protocol, on the target signal quality.

Optionally, the processing module 172 is further configured to configure, by a third signaling, the target measurement; or agree, by a protocol, on the target measurement.

Optionally, the target measurement includes at least one of: reference signal receiving power, RSRP; reference signal receiving quality, RSRQ; signal to interference plus noise ratio, SINR; or received signal strength indication, RSSI.

Optionally, the processing module 172 is further configured to obtain a first starting subband number of the one or more unavailable subbands and a first subband quantity of the one or more unavailable subbands.

Optionally, the transceiver module 171 is further configured to determine the first starting subband number and the first subband quantity as the indication information; and transmit the indication information to the network device.

Optionally, the processing module 172 is further configured to obtain a first resource indication value for the one or more unavailable subbands.

Optionally, the transceiver module 171 is further configured to determine the first resource indication value as the indication information; and transmit the indication information to the network device.

Optionally, the processing module 172 is further configured to: obtain a first starting subband number of the one or more unavailable subbands and a first subband quantity of the one or more unavailable subbands; obtain a second subband quantity of subbands in a measurement bandwidth; and determine the first resource indication value according to the first starting subband number, the first subband quantity, and the second subband quantity, where the first subband quantity is greater than 1 and less than a difference between the second subband quantity and the first starting subband number.

Optionally, the processing module 172 is further configured to round down half of the second subband quantity to obtain a first value; obtain a first difference between the first subband quantity and 1; and determine the first resource indication value according to the first value, the first difference, and the first starting subband number.

Optionally, the processing module 172 is further configured to: in response to determining that the second value is less than or equal to the first difference, obtain a first product of the first value and the first difference, and obtain a first sum of the first product and the first starting subband number as the first resource indication value.

Optionally, the processing module 172 is further configured to: in response to determining that the second value is greater than the first difference, obtain a second difference between the second subband quantity and the first value, and obtain a second product of the second difference and the second subband quantity; obtain a third difference between the second subband quantity and 1, and obtain a fourth difference between the third difference and the first starting subband number; and obtain a second sum of the second product and the fourth difference as the first resource indication value.

Optionally, the processing module 172 is further configured to generate a first bitmap according to the one or more unavailable subbands.

Optionally, the transceiver module 171 is further configured to transmit the first bitmap as the indication information to the network device, where in the first bitmap, a value for the unavailable subband is a first bit value, and a value for the available subband is a second bit valuee.

Optionally, the processing module 172 is further configured to determine one or more available subbands in a plurality of subbands in a frequency-domain resource according to the one or more unavailable subbands; or determining one or more available subbands in the plurality of subbands according to measurement for reference signals.

Optionally, the transceiver module 171 is further configured to determine the indication information according to the one or more available subbands, and transmit the indication information to the network device.

Optionally, the processing module 172 is further configured to obtain a second starting subband number of the one or more available subbands and a third subband quantity of the one or more available subbands.

Optionally, the transceiver module 171 is further configured to transmit the second starting subband number and the third subband quantity as the indication information to the network device.

Optionally, the processing module 172 is further configured to obtain a second resource indication value for the one or more available subbands.

Optionally, the transceiver module 171 is further configured to determine the second resource indication value as an indication information and transmit the indication information to the network device.

Optionally, the processing module 172 is further configured to: obtain a second starting subband number of the one or more available subbands and a third subband quantity of the one or more available subbands; obtain a second subband quantity of subbands in a measurement bandwidth; and determine the second resource indication value according to the second starting subband number, the third subband quantity, and the second subband quantity, where the third subband quantity is greater than 1 and less than a difference between the second subband quantity and the second starting subband number.

Optionally, the processing module 172 is further configured to round down half of the second subband quantity to obtain the first value, and obtain a fifth difference between the third subband quantity and 1, and determine the second resource indication value according to the first value, the fifth difference, and the second starting subband number.

Optionally, the processing module 172 is further configured to: in response to determining that the second value is less than or equal to the fifth difference, obtain a third product of the first value and the fifth difference, and obtain a third sum of the third product and the second starting subband number as the second resource indication value.

Optionally, the processing module 172 is further configured to: in response to determine that the second value is greater than the fifth difference, obtain a sixth difference between the second subband quantity and the first value, and obtain a fourth product of the sixth difference and the second subband quantity; obtain a seventh difference between the second subband quantity and 1, and obtain an eighth difference between the seventh difference and the second starting subband number; and obtain a fourth sum of the third product and the eighth difference as the second resource indication value.

Optionally, the processing module 172 is further configured to generate a second bitmap according to the one or more available subbands.

Optionally, the transceiver module 171 is further configured to transmit the second bitmap as the indication information to the network device, where one or more values in the second bitmap for the one or more unavailable subbands are a third bit value, and one or more values in the first bitmap for one or more available subbands are a fourth bit value.

Optionally, the transceiver module 171 is further configured to transmit channel state information (CSI) of the one or more available subbands in the plurality of subbands to the network device.

The communication apparatus 170 is a network device, and includes:

a transceiver module 171, configured to transmit reference signals for measurement and receive indication information transmitted by a terminal device, where the indication information indicates one or more unavailable subbands in a plurality of subbands in a frequency-domain resource, where the one or more unavailable subbands is determined by the terminal device.

Optionally, the transceiver module 171 is further configured to transmit a reference signals for measurement on the plurality of subbands to the terminal device, where the reference signals are used to determine the one or more unavailable subbands.

Optionally, the transceiver module 171 is further configured to simultaneously transmit reference signals to the terminal device in the plurality of subbands, alternatively, transmit reference signals to the terminal device at different times in the plurality of subbands.

Optionally, the transceiver module 171 is further configured to configure, by a first signaling, a time-frequency resource to the terminal device, where the terminal device measures the reference signals in the time-frequency resource.

Optionally, the transceiver module 171 is further configured to configure, by a second signaling, a target signal quality for the terminal device, where the target signal quality is used for comparison with values of a target measurement of the reference signals on the plurality of subbands measured by the terminal device, to determine the one or more unavailable subbands whose values of the target measurement are less than the target signal quality.

Optionally, the transceiver module 171 is further configured to configure, by a third signaling, the target measurement to the terminal device.

Optionally, the target measurement includes at least one of: reference signal receiving power, RSRP; reference signal receiving quality, RSRQ; signal to interference plus noise ratio, SINR; or received signal strength indication, RSSI.

Optionally, the transceiver module 171 is further configured to receive a starting subband number of the one or more unavailable subbands and a first subband quantity of the one or more unavailable subbands, where the first starting subband number and the first subband quantity are the indication information.

Optionally, the transceiver module 171 is further configured to receive a first resource indication value for the one or more unavailable subbands, where the first resource indication value is the indication information.

Optionally, the first resource indication value is determined by the terminal device according to the first starting subband number of the one or more unavailable subbands, the first subband quantity of the one or more unavailable subbands, and a second subband quantity of subbands in a measurement bandwidth, where the first subband quantity is greater than 1 and less than a difference between the second subband quantity and the first starting subband number.

Optionally, the transceiver module 171 is further configured to receive a first bitmap generated according to the one or more unavailable subbands, where the first bitmap is the indication information, where in the first bitmap, a value for the unavailable subband is a first bit value, and a value for the available subband is a second bit valuee.

Optionally, the indication information is determined by the one or more available subbands in the plurality of subbands.

Optionally, the transceiver module 171 is further configured to receive a second starting subband number of the one or more available subbands and a third subband quantity of the one or more available subbands, where the second starting subband number and the third subband quantity are the indication information.

Optionally, the transceiver module 171 is further configured to receive a second resource indication value for the one or more available subbands, where the second resource indication value is the indication information.

Optionally, the second resource indication value is determined by the terminal device according to the second starting subband number of the one or more available subbands, the third subband quantity of the one or more available subbands, and a second subband quantity of subbands in a measurement bandwidth, where the third subband quantity is greater than 1 and less than a difference between the second subband quantity and the second starting subband number.

Optionally, the transceiver module 171 is further configured to receive a second bitmap generated according to the one or more available subbands, where the second bitmap is the indication information, where in the second bitmap, a value for the unavailable subband is a third bit value, and a value for the available subband is a fourth bit value.

Optionally, the transceiver module 171 is further configured to receive channel state information (CSI) of the one or more available subbands in the plurality of subbands, where the channel state information is transmitted by the terminal device.

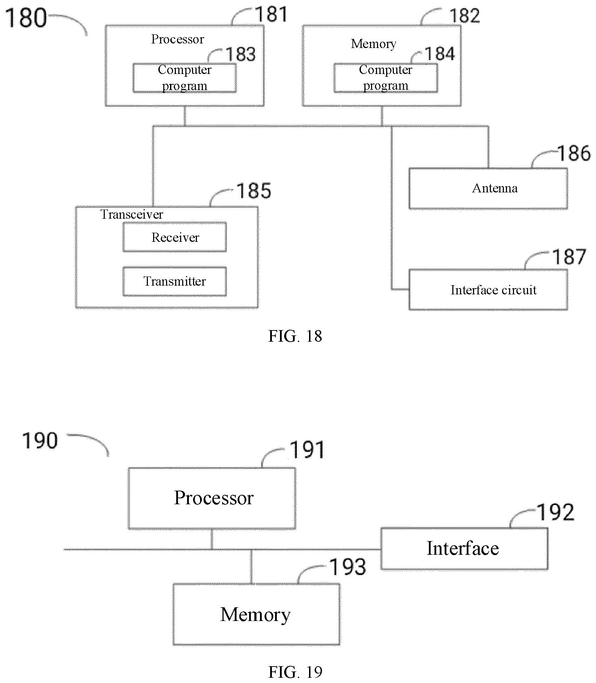

Referring to FIG. 18, FIG. 18 is a schematic structural diagram of a communication device 180 according to embodiments of the present disclosure. The communication device 180 can be a network device, a terminal device, a chip, a chip system, or a processor that supports the embodiment of the above method implemented by a network device, and can also be a chip, a chip system, or a processor that supports the embodiment of the above method implemented by a terminal device. The device can be configured to implement the methods described in the above method embodiments, as described in the above method embodiments.

The communication device 180 may include one or more processors 181. The processor 181 can be a general-purpose processor or a dedicated processor, etc. For example, the processor 181 can be a baseband processor or a central processing unit. The baseband processor can be used to process communication protocols and communication data, while the central processor can be used to control communication devices (such as base stations, baseband chips, terminal devices, terminal device chips, DU or CU, etc.), execute computer programs, and process computer program data.

Optionally, the communication device 180 may further include one or more memories 182, on which a computer program 184 may be stored, and the processor 181 may execute the computer program 184 to enable the communication device 180 to execute the method described in the above embodiments. Optionally, the memory 182 may further store data. The communication device 180 and memory 182 can be set separately or integrated together.

Optionally, the communication device 180 may also include a transceiver 185 and an antenna 186. The transceiver 185 can be referred to as a transceiver unit, transceiver machine, or transceiver circuit, etc., used to achieve transceiver functions. The transceiver 185 can include a receiver and a transmitter, and the receiver can be referred to as a receiveing machine or a receiving circuit, etc., to achieve receiving functions. A transmitter can be referred to as a transmitting machine or a transmission circuit, etc., used to achieve transmission functions.

Optionally, the communication device 180 may further include one or more interface circuits 187. Interface circuit 187 is used to receive code instructions and transmit them to processor 181. The processor 181 runs the code instructions to cause the communication device 180 to execute the method described in the above method embodiment.

In an embodiment, the processor 181 may include a transceiver for implementing reception and transmission functions. For example, the transceiver can be a transceiver circuit, an interface, or an interface circuit. The transceiver circuit, interface, or interface circuit used to achieve receiving and transmitting functions can be separate or integrated together. The above-mentioned transceiver circuit, interface or interface circuit can be used for reading and writing code/data, or the above-mentioned transceiver circuit, interface or interface circuit can be used for signal transmission or transmission.

In an embodiment, the processor 181 may store a computer program 183. The computer program 183 runs on the processor 181 to enable the communication device 180 to execute the method described in the above embodiments. The computer program 183 may be embedded in processor 181, where the processor 181 may be implemented by hardware.

In an embodiment, the communication device 180 may include a circuit that can perform the functions of transmitting, receiving, or communicating as described in the aforementioned method embodiments. The processor and transceiver described in the present disclosure can be implemented on integrated circuits (ICs), analog ICs, RF integrated circuits (RFICs), mixed signal ICs, application specific integrated circuits (ASICs), printed circuit boards (PCBs), electronic devices, or the like. The processor and transceiver can also be manufactured using various IC process technologies, such as complementary metal oxide semiconductor (CMOS), nMetal oxide semiconductor (NMOS), positive channel metal oxide semiconductor (PMOS), bipolar junction transistor (BJT), bipolar CMOS (BiCMOS), silicon germanium (SiGe), or gallium arsenide (GaAs), etc.

The communication device described in the above embodiments may be a network device or a terminal device, but the scope of the communication device described in the present disclosure is not limited to this, and the structure of the communication device may not be limited by FIG. 18. The communication device can be a independent device or can be part of a larger device. For example, the communication device may be:

(1) Independent integrated circuit (IC), or a chip, or a chip system or a subsystem;
(2) A set of one or more ICs, which may optically further include a storage component for storing data or a computer program;
(3) ASICs, such as modems;
(4) Modules that can be embedded in other devices;
(5) Receiver, terminal device, intelligent terminal device, cellular phone, wireless device, handheld device, mobile unit, vehicle mounted device, network device, cloud device, or artificial intelligence device, etc;
(6) Others and so on.

In a case where the communication device is a chip or a chip system, it can be referred to the schematic structural diagram of a chip shown in FIG. 19. The chip shown in FIG. 19 includes a processor 191 and an interface 192. The number of processors 191 can be one or more, and the number of interfaces 192 can be multiple.

Optionally, the chip also includes a memory 193, which is used to store necessary computer programs and data.

Those skilled in the art can also understand that the various illustrative logical blocks and steps listed in the embodiments of the present disclosure can be implemented through electronic hardware, computer software, or a combination of both. Whether such functionality is implemented through hardware or software depends on the specific application and overall system design requirements. Those skilled in the art may use various methods to implement the described functions for each specific application, but such implementation should not be understood as exceeding the scope of protection in the embodiments of the present disclosure.

The embodiments of the present disclosure also provides a system for channel measurement, which includes a communication apparatus as a terminal device and a communication apparatus as a network device in the aforementioned embodiment of FIG. 17, or includes a communication device as a terminal device and a communication device as a network device in the aforementioned embodiment of FIG. 18.

The present disclosure further provides a readable storage medium on which instructions are stored, and when the instructions are executed by a computer, the functions of any one of the above method embodiments are implemented.

The present disclosure further provides a computer program product that implements the functions of any one of the above method embodiments when executed by a computer.

The above embodiments can be fully or partially implemented through software, hardware, firmware, or any combination thereof. When implemented using software, all or part of the steps can be implemented in the form of a computer program product. The computer program product includes one or more computer programs. When loading and executing the computer program on the computer, all or part of the processes or functions described in the embodiments of the present disclosure are generated. The computer can be a general-purpose computer, a specialized computer, a computer network, or other programmable devices. The computer program can be stored in a computer-readable storage medium or transmitted from one computer-readable storage medium to another. For example, the computer program can be transmitted from one website site, computer, server, or data center to another via wired (such as coaxial cable, fiber optic, digital subscriber line (DSL)) or wireless (such as infrared, wireless, microwave, etc.) manners. The computer-readable storage medium can be any available medium that the computer can access, or a data storage device such as a server, data center, etc. that integrates one or more available media. The available medium can be a magnetic medium (such as floppy disk, hard disk, magnetic tape), optical medium (such as high-density digital video disc (DVD)), or semiconductor medium (such as solid state disk (SSD)), etc.

Those skilled in the art can understand that the first, second, and other numerical numbers involved in the present disclosure are only for the convenience of description and differentiation, and are not used to limit the scope of the embodiments of the present disclosure, and also do not indicate sequential ordering.

"At least one" in the present disclosure can also be described as one or more, and multiple can be two, three, four, or more, without limitation in the present disclosure. In embodiments of the present disclosure, for a technical feature, the technical features described in "first", "second", "third", "A", "B", "C", and "D" are distinguished, and there is no sequential ordering or magnitude ordering between the technical features described in "first", "second", "third", "A", "B", "C", and "D".

The corresponding relationships shown in each table in the present disclosure can be configured or predefined. The values of the information in each table are only examples and can be configured to other values, which is not limited in the present disclosure. When configuring the correspondence between information and various parameters, it is not necessary to configure all the correspondence shown in each table. For example, in the table of the present disclosure, the corresponding relationships shown in certain rows may not be configured. For example, appropriate deformation adjustments can be made according to the above table, such as splitting, merging, etc. The names of the parameters shown in the titles of the above tables can also use other names that can be understood by the communication device, and the values or representations of their parameters can also be understood by other values or representations that can be understood by the communication device. When implementing the above tables, other data structures can also be used, such as arrays, queues, containers, stacks, linear tables, pointers, linked lists, trees, graphs, structures, classes, heaps, hash tables, or hash tables.

The predefined terms in the present disclosure can be understood as defined, defined in advance, stored, pre-stored, pre-negotiated, pre-configured, solidified, or pre-fired.

Those skilled in the art can realize that the units and algorithm steps of each example described in the embodiments of the present disclosure can be implemented in electronic hardware, or a combination of computer software and electronic hardware. Whether these functions are executed in hardware or software depends on the specific application and design constraints of the technical solution. Those skilled in the art may use different methods to implement the described functions for each specific application, but such implementation should not be considered beyond the scope of the present disclosure.

Those skilled in the art can clearly understand that for the convenience and brevity of description, the specific working process of the above-described system, apparatus and unit can refer to the corresponding process in the foregoing method embodiments, which will not be repeated here.

The foregoing description is merely a specific embodiment of the present disclosure, but the scope of protection of the present disclosure is not limited thereto, and any variation or replacement readily conceivable by a person skilled in the art within the technical scope disclosed in the present disclosure should belong to the scope of protection of the present disclosure. Therefore, the scope of protection of the present disclosure should be based on the scope of protection of the claims.

**Claims**

1. A method for channel measurement, performed by a terminal device, comprising:

   obtaining one or more unavailable subbands in a plurality of subbands in a time-frequency resource; and
   transmitting indication information to a network device, wherein the indication information is configured to report the one or more unavailable subbands to the network device.

2. The method according to claim 1, wherein the obtaining the one or more unavailable subbands in the time-frequency resource comprises:

   receiving reference signals on the plurality of subbands; and
   measuring the reference signals transmitted on the plurality of subbands, to obtain the one or more unavailable subbands.

3. The method according to claim 2, wherein the receiving the reference signals on the plurality of subbands comprises:

   simultaneously receiving the reference signals respectively transmitted by the plurality of subbands; or
   receiving the reference signals respectively transmitted by the plurality of subbands at different times.

4. The method according to claim 2, further comprising:
   transmitting the reference signals by a time-frequency resource configured by a first signaling or agreed on by a protocol.

5. The method according to claim 2, wherein the measuring the reference signals to obtain the one or more unavailable subbands comprises:

   obtaining values of a target measurement for the reference signals on the plurality of subbands; and
   determining one or more target subbands, wherein the value of the target measurement of each of the one or more target subbands is less than a target signal quality, and the one or more target subbands are the one or more unavailable subbands.

6. The method according to claim 5, further comprising:

   configuring, by a second signaling, the target signal quality; or
   agreeing, by a protocol, on the target signal quality.

7. The method according to claim 5, further comprising:

   configuring, by a third signaling, the target measurement; or
   agreeing, by a protocol, on the target measurement.

8. The method according to claim 7, wherein the target measurement comprises at least one of:

   a reference signal receiving power, RSRP;
   a reference signal receiving quality, RSRQ;
   a signal to interference plus noise ratio, SINR; or
   a received signal strength indication, RSSI.

9. The method according to any one of claims 1-8, wherein the transmitting the indication information to the network device comprises:

obtaining a first starting subband number of the one or more unavailable subbands and a first subband quantity of the one or more unavailable subbands;
determining the first starting subband number and the first subband quantity as the indication information; and
transmitting the indication information to the network device.

10. The method according to any one of claims 1-8, wherein the transmitting the indication information to the network device comprises:

obtaining a first resource indication value for the one or more unavailable subbands;
determining the first resource indication value as the indication information; and
transmitting the indication information to the network device.

11. The method according to claim 10, wherein the obtaining the first resource indication value for the one or more unavailable subbands comprises:

obtaining a first starting subband number of the one or more unavailable subbands and a first subband quantity of the one or more unavailable subbands;
obtaining a second subband quantity comprised in a measurement bandwidth; and
determining the first resource indication value according to the first starting subband number, the first subband quantity, and the second subband quantity, wherein the first subband quantity is greater than 1 and less than a difference between the second subband quantity and the first starting subband number.

12. The method according to claim 11, wherein the determining the first resource indication value according to the starting subband number, the first subband quantity, and the second subband quantity comprises:

rounding down half of the second subband quantity to obtain a first value;
obtaining a first difference between the first subband quantity and 1; and
determining the first resource indication value according to the first value, the first difference, and the first starting subband number.

13. The method according to claim 12, wherein the determining the first resource indication value according to the first value, the first difference, and the starting subband number comprises:
in response to determining that the second value is less than or equal to the first difference, obtaining a first product of the first value and the first difference, and obtaining a first sum of the first product and the first starting subband number as the first resource indication value.

14. The method according to claim 12, wherein the determining the first resource indication value according to the first value, the first difference, and the starting subband number comprises:

in response to determining that the second value is greater than the first difference, obtaining a second difference between the second subband quantity and the first value, and obtaining a second product of the second difference and the second subband quantity;
obtaining a third difference between the second subband quantity and 1, and obtaining a fourth difference between the third difference and the first starting subband number; and
obtaining a second sum of the second product and the fourth difference as the first resource indication value.

15. The method according to any one of claims 1-8, wherein the transmitting the indication information to the network device comprises:

generating a first bitmap according to the one or more unavailable subbands, and
transmitting the first bitmap as the indication information to the network device, wherein in the first bitmap, a value for at least one of the one or more unavailable subbands is a first bit value, and a value for an available subband is a second bit value.

16. The method according to any one of claims 1-8, wherein the transmitting the indication information to the network device comprises:

determining one or more available subbands in a plurality of subbands in a frequency-domain resource according to the one or more unavailable subbands, determining the indication information according to the one or more available subbands, and transmitting the indication information to the network device; or
determining one or more available subbands in the plurality of subbands according to measurement for reference signals.

17. The method according to claim 16, wherein the determining the indication information according to the one or more available subbands, and transmitting the indication information to the network device comprises:

obtaining a second starting subband number of the one or more available subbands and a third subband quantity of the one or more available subbands; and
determining the second starting subband number and the third subband quantity as the indication information; and transmitting the indication information to the network device.

18. The method according to claim 16, wherein the transmitting the indication information to the network device comprises:

obtaining a second resource indication value for the one or more available subbands;
determining the second resource indication value as the indication information; and
transmitting the indication information to the network device.

19. The method according to claim 18, wherein the obtaining the second resource indication value for the one or more available subbands comprises:

obtaining a second starting subband number of the one or more available subbands and a third subband quantity of the one or more available subbands;
obtaining a second subband quantity comprised in a measurement bandwidth; and
determining the second resource indication value according to the second starting subband number, the third subband quantity, and the second subband quantity, wherein the third subband quantity is greater than 1 and less than a difference between the second subband quantity and the second starting subband number.

20. The method according to claim 19, wherein the determining the second resource indication value according to the second starting subband number, the third subband quantity, and the second subband quantity comprises:

rounding down half of the second subband quantity to obtain a first value;
obtaining a fifth difference between the third subband quantity and 1; and
determining the second resource indication value according to the first value, the fifth difference, and the second starting subband number.

21. The method according to claim 20, wherein the determining the second resource indication value according to the first value, the fifth difference, and the second starting subband number comprises:
in response to determining that the second value is less than or equal to the fifth difference, obtaining a third product of the first value and the fifth difference, and obtaining a third sum of the third product and the second starting subband number as the second resource indication value.

22. The method according to claim 21, wherein the determining the second resource indication value according to the first value, the fifth difference, and the second starting subband number comprises:

in response to determining that the second value is greater than the fifth difference, obtaining a sixth difference between the second subband quantity and the first value, and obtaining a fourth product of the sixth difference and the second subband quantity;
obtaining a seventh difference between the second subband quantity and 1, and obtaining an eighth difference between the seventh difference and the second starting subband number; and
obtaining a fourth sum of the third product and the eighth difference as the second resource indication value.

23. The method according to claim 16, wherein the transmitting the indication information to the network device comprises:

generating a second bitmap according to the one or more available subbands, and
transmitting the second bitmap as the indication information to the network device, wherein in the second bitmap, a value for at least one of the one or more unavailable subbands is a third bit value, and a value for an available subband is a fourth bit value.

24. The method according to claim 1, further comprising:
transmitting channel state information, CSI, of one or more available subbands in the plurality of subbands to the network device.

25. A method for channel measurement, performed by a network device, comprising:
transmitting reference signals for measurement and receiving indication information transmitted by a terminal device, wherein the indication information indicates one or more unavailable subbands in a plurality of subbands in a frequency-domain resource, wherein the one or more unavailable subbands is determined by the terminal device.

26. The method according to claim 25, further comprising:
transmitting the reference signals for measurement on the plurality of subbands to the terminal device, wherein the reference signals are used to determine the one or more unavailable subbands.

27. The method according to claim 26, wherein the transmitting the reference signals for measurement on the plurality of subbands to the terminal device comprises:

simultaneously transmitting the reference signals on the plurality of subbands to the terminal device; or
transmitting, at different times, the reference signals on the plurality of subbands to the terminal device.

28. The method according to claim 26, further comprising:
configuring, by a first signaling, a time-frequency resource to the terminal device, wherein the terminal device measures the reference signals in the time-frequency resource.

29. The method according to claim 26, further comprising:
configuring, by a second signaling, a target signal quality for the terminal device, wherein the target signal quality is used for comparison with values of a target measurement of the reference signals on the plurality of subbands measured by the terminal device, to determine the one or more unavailable subbands whose values of the target measurement are less than the target signal quality.

30. The method according to claim 29, further comprising:
configuring, by a third signaling, the target measurement for the terminal device.

31. The method according to claim 30, wherein the target measurement comprises at least one of:

a reference signal receiving power, RSRP;
a reference signal receiving quality, RSRQ;
a signal to interference plus noise ratio, SINR; or
a received signal strength indication, RSSI.

32. The method according to any one of claims 25-31, wherein the receiving the indication information transmitted by the terminal device comprises:
receiving a starting subband number of the one or more unavailable subbands and a first subband quantity of the one or more unavailable subbands, wherein the first starting subband number and the first subband quantity are the indication information.

33. The method according to any one of claims 25-31, wherein the receiving the indication information transmitted by the terminal device comprises:
receiving a first resource indication value for the one or more unavailable subbands, wherein the first resource indication value is the indication information.

34. The method according to claim 33, wherein the first resource indication value is determined by the terminal device according to the first starting subband number of the one or more unavailable subbands, the first subband quantity of the one or more unavailable subbands, and a second subband quantity comprised in a measurement bandwidth, wherein the first subband quantity is greater than 1 and less than a difference between the second subband quantity and the first starting subband number.

35. The method according to any one of claims 25-31, wherein receiving the indication information transmitted by the terminal device comprises:
receiving a first bitmap generated according to the one or more unavailable subbands, wherein the first bitmap is the indication information, wherein in the first bitmap, a value for the unavailable subband is a first bit value, and a value for the available subband is a second bit valuee.

36. The method according to any one of claims 25-31, wherein the indication information is determined according to one or more available subbands in the plurality of subbands.

37. The method according to claim 36, wherein the receiving the indication information transmitted by the terminal device comprises:
receiving a second starting subband number of the one or more available subbands and a third subband quantity of the one or more available subbands, wherein the second starting subband number and the third subband quantity are the indication information.

38. The method according to claim 36, wherein the receiving the indication information transmitted by the terminal device comprises:
receiving a second resource indication value for the one or more available subbands, wherein the second resource indication value is the indication information.

39. The method according to claim 38, wherein the second resource indication value is determined by the terminal device according to the second starting subband number of the one or more available subbands, the third subband quantity of the one or more available subbands, and a second subband quantity comprised in a measurement bandwidth, wherein the third subband quantity is greater than 1 and less than a difference between the second subband quantity and the second starting subband number.

40. The method according to claim 36, wherein the receiving the indication information transmitted by the terminal device comprises:
receiving a second bitmap generated according to the one or more available subbands, wherein the second bitmap is the indication information, wherein in the second bitmap, a value for the unavailable subband is a third bit value, and a value for the available subband is a fourth bit value.

41. The method according to claim 25, further comprising:
receiving channel state information, CSI, of the one or more available subbands in the plurality of subbands, wherein the channel state information is transmitted by the terminal device.

42. A communication apparatus, comprising:

a transceiver module, configured to transmit indication information to a network device, wherein the indication information is configured to report one or more unavailable subbands to the network device.
a processing module, configured to obtain one or more unavailable subbands in a plurality of subbands in a time-frequency resource.

43. A communication apparatus, comprising:
a transceiver module, configured to transmit reference signals for measurement and receive indication information transmitted by a terminal device, wherein the indication information indicates one or more unavailable subbands in a plurality of subbands in a frequency-domain resource, wherein the one or more unavailable subbands is determined by the terminal device.

44. A communication device, comprising one or more processors and one or more memories, wherein a computer program is stored in the one or more memories, and the one or more processors collectively execute the computer program stored in the one or more memories which causes the communication device to execute the method according to any one of claims 1 to 24.

**45.** A communication device, comprising one or more processors and one or more memories, wherein a computer program is stored in the one or more memories, and the one or more processors collectively execute the computer program stored in the one or more memories which causes the communication device to execute the method according to any one of claims 25 to 41.

**46.** A communication device, comprising one or more processors and an interface circuit; wherein

the interface circuit is configured to receive code instructions and transmit the code instructions to the one or more processors; and
the one or more processors are used to run the code instructions to execute the method according to any one of claims 1 to 24.

**47.** A communication device, comprising one or more processors and an interface circuit; wherein

the interface circuit is configured to receive code instructions and transmit the code instructions to the one or more processors; and
the one or more processors are used to run the code instructions to execute the method according to any one of claims 25 to 41.

**48.** A computer-readable storage medium storing instructions, wherein when the instructions are executed, the method according to any one of claims 1 to 24 is implemented.

**49.** A computer-readable storage medium storing instructions, wherein when the instructions are executed, the method according to any one of claims 25 to 41 is implemented.

Network device  ⌐101

Terminal device  ⌐102

**FIG. 1**

| Obtain one or more unavailable subbands in a plurality of subbands in a time-frequency resource | S21 |

| Transmit indication information to a network device, where the indication information is configured to report the one or more unavailable subbands to the network device | S22 |

**FIG. 2**

Path loss in dB at different transmission distances.

**FIG. 3**

| Receive reference signals on the plurality of subbands | S41 |

| Measure the reference signals transmitted on the plurality of subbands, to obtain the one or more unavailable subbands | S42 |

| Transmit indication information to a network device, where the indication information is configured to report the one or more unavailable subbands to the network device | S43 |

**FIG. 4**

Receive the reference signals by a time-frequency resource configured by a first signaling or agreed on by a protocol ⟋S51

↓

Configure a target signal quality by a second signaling; or agree on the target signal quality by a protocol ⟋S52

↓

Configure a target measurement by a third signaling; or agree on the target measurement by a protocol ⟋S53

↓

Measure the reference signals transmitted on the plurality of subbands, to obtain the one or more unavailable subbands ⟋S54

↓

Transmit indication information to a network device, where the indication information is configured to report the one or more unavailable subbands to the network device ⟋S55

FIG. 5

Obtain one or more unavailable subbands in a plurality of subbands in a time-frequency resource ⟋S60

↓

Obtain a first starting subband number of the one or more unavailable subbands and a first subband quantity of the one or more unavailable subbands ⟋S61

↓

Determine the first starting subband number and the first subband quantity as the indication information; and transmit the indication information to the network device ⟋S62

FIG. 6

| Obtain one or more unavailable subbands in a plurality of subbands in a time-frequency resource | S70 |

↓

| Obtain a first resource indication value for the one or more unavailable subbands | S71 |

↓

| Determine the first resource indication value as the indication information; and transmit the indication information to the network device | S72 |

FIG. 7

| Obtain one or more unavailable subbands in a plurality of subbands in a time-frequency resource | S80 |

↓

| Determine a first bitmap according to the one or more unavailable subbands | S81 |

↓

| Transmit the first bitmap as the indication information to the network device, where the value in the first bitmap for the unavailable subband is a first bit value, and the value in the first bitmap for the available subband is a second bit value | S82 |

FIG. 8

| Obtain one or more unavailable subbands in a plurality of subbands in a time-frequency resource | S90 |

↓

| According to one or more unavailable subbands, determine one or more available subbands in the plurality of subbands in the frequency-domain resource | S91 |

↓

| Determine the indication information according to the one or more available subbands, and transmit the indication information to the network device | S92 |

FIG. 9

Receive reference signals on the plurality of subbands — S100

Determine one or more available subbands in the plurality of subbands according to measurement for reference signals — S101

Determine the indication information according to the one or more available subbands, and transmit the indication information to the network device — S102

FIG. 10

Obtain one or more available subbands in a plurality of subbands in a time-frequency resource — S110

Obtain a second starting subband number of the one or more available subbands and a third subband quantity of the one or more available subbands — S111

Determine the second starting subband number and the third subband quantity as the indication information; and transmit the indication information to the network device — S112

FIG. 11

Obtain one or more available subbands in a plurality of subbands in a time-frequency resource — S120

Obtain a second resource indication value for the one or more available subbands — S121

Determine the second resource indication value as the indication information; and transmit the indication information to the network device — S122

FIG. 12

| Obtain one or more available subbands in a plurality of subbands in a time-frequency resource | S130 |

↓

| Determine a second bitmap according to the one or more available subbands | S131 |

↓

| Transmit the second bitmap as the indication information to the network device, where in the second bitmap, the value for the unavailable subband is a third bit value, and the value for the available subband is a fourth bit value | S132 |

FIG. 13

| Obtain one or more unavailable subbands in a plurality of subbands in a time-frequency resource | S140 |

↓

| Transmit indication information to a network device, where the indication information is configured to report the one or more unavailable subbands or the one or more available subbands to the network device | S141 |

↓

| Transmit channel state information (CSI) of the one or more available subbands in the plurality of subbands to the network device | S142 |

FIG. 14

| Transmit reference signals for measurement | S151 |

↓

| Receive indication information from a terminal device, where the indication information indicates one or more unavailable subbands in a plurality of subbands in a frequency-domain resource, where the one or more unavailable subbands is determined by the terminal device | S152 |

FIG. 15

| | |
|---|---|
| Configure a time-frequency resource for the terminal device by a first signaling, where the terminal device measures the reference signals in the time-frequency resource | S161 |
| Configure a target signal quality for the terminal device by a second signaling, where the target signal quality is used for comparison with values of the target measurement of the reference signals on the plurality of subbands measured by the terminal device, to determine the one or more unavailable subbands whose values of the target measurement are less than the target signal quality | S162 |
| Configure the target measurement to the terminal device by a third signaling | S163 |
| Transmit reference signals for measurement | S164 |
| Receive indication information transmitted by a terminal device, where the indication information indicates one or more unavailable subbands in a plurality of subbands in a frequency-domain resource, where the one or more unavailable subbands is determined by the terminal device | S165 |

FIG. 16

Communication apparatus
170

| Transceiver module 171 | Processing module 172 |
|---|---|

FIG. 17

180
181 Processor
183 Computer program
182 Memory
184 Computer program
186 Antenna
185 Transceiver
Receiver
Transmitter
187 Interface circuit

FIG. 18

190
191 Processor
192 Interface
193 Memory

FIG. 19

## INTERNATIONAL SEARCH REPORT

| | |
|---|---|
| International application No. | |
| **PCT/CN2021/131296** | |

### A. CLASSIFICATION OF SUBJECT MATTER

H04W 72/02(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS, CNTXT, WPABS, ENTXT, DWPI, VEN, 3GPP: 不可用, 不能用, 可用, 子带, 频带, 带宽, 资源, 信道, 测量, 上报, 报告, 反馈, unavailable, useless, available, useful, sub-channel, subchannel, sub-band, subband, frequency band, bandwidth, channel, measure, detect, report, feedback

### C. DOCUMENTS CONSIDERED TO BE RELEVANT

| Category* | Citation of document, with indication, where appropriate, of the relevant passages | Relevant to claim No. |
|---|---|---|
| Y | CN 104205934 A (INTEL CORP.) 10 December 2014 (2014-12-10) description, paragraphs [0013]-[0061], and figures 1-7 | 1-8, 16, 24-31, 36, 41-49 |
| Y | CN 103379648 A (POTEVIO INSTITUTE OF TECHNOLOGY CO., LTD.) 30 October 2013 (2013-10-30) description, paragraphs [0027]-[0053], and figures 1-3 | 1-8, 16, 24-31, 36, 41-49 |
| Y | CN 112399589 A (HUAWEI TECHNOLOGIES CO., LTD.) 23 February 2021 (2021-02-23) entire description | 9-15, 17-23, 32-35, 37-40 |
| A | WO 2021092959 A1 (GUANGDONG OPPO MOBILE TELECOMMUNICATIONS CO., LTD.) 20 May 2021 (2021-05-20) entire document | 1-49 |
| A | CN 111836371 A (GOHIGH DATA NETWORKS TECHNOLOGY CO., LTD.) 27 October 2020 (2020-10-27) entire document | 1-49 |
| A | US 2013336242 A1 (SAMSUNG ELECTRONICS CO., LTD.) 19 December 2013 (2013-12-19) entire document | 1-49 |

☐ Further documents are listed in the continuation of Box C.    ☑ See patent family annex.

| | |
|---|---|
| \*   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **01 August 2022** | **08 August 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

# EP 4 436 278 A1

| INTERNATIONAL SEARCH REPORT Information on patent family members | | | International application No. PCT/CN2021/131296 |
|---|---|---|---|

| Patent document cited in search report | | | Publication date (day/month/year) | Patent family member(s) | | | Publication date (day/month/year) |
|---|---|---|---|---|---|---|---|
| CN | 104205934 | A | 10 December 2014 | ES | 2612553 | T3 | 17 May 2017 |
| | | | | KR | 20140142712 | A | 12 December 2014 |
| | | | | HU | E039491 | T2 | 28 January 2019 |
| | | | | US | 2013242817 | A1 | 19 September 2013 |
| | | | | US | 2019372744 | A1 | 05 December 2019 |
| | | | | CN | 104205689 | A | 10 December 2014 |
| | | | | BE | 1021235 | B1 | 08 September 2015 |
| | | | | EP | 3133857 | A1 | 22 February 2017 |
| | | | | EP | 2826160 | A1 | 21 January 2015 |
| | | | | ES | 2439623 | A2 | 23 January 2014 |
| | | | | MY | 170744 | A | 27 August 2019 |
| | | | | JP | 2015510379 | A | 02 April 2015 |
| | | | | AU | 2011232618 | B2 | 31 March 2016 |
| | | | | WO | 2013138659 | A1 | 19 September 2013 |
| | | | | EP | 2826165 | A1 | 21 January 2015 |
| | | | | ES | 2639773 | T3 | 30 October 2017 |
| | | | | EP | 2826298 | A1 | 21 January 2015 |
| | | | | ES | 2729923 | T3 | 07 November 2019 |
| | | | | US | 2013242735 | A1 | 19 September 2013 |
| | | | | US | 2013242887 | A1 | 19 September 2013 |
| | | | | CN | 104170304 | A | 26 November 2014 |
| | | | | ES | 2684223 | T3 | 01 October 2018 |
| | | | | CA | 2866352 | A1 | 19 September 2013 |
| | | | | ES | 2643229 | T3 | 21 November 2017 |
| | | | | AU | 2013232287 | A1 | 25 September 2014 |
| | | | | TW | 201513601 | A | 01 April 2015 |
| | | | | HU | E030599 | T2 | 29 May 2017 |
| | | | | JP | 2015513270 | A | 30 April 2015 |
| | | | | US | 2013242720 | A1 | 19 September 2013 |
| | | | | EP | 2863686 | A2 | 22 April 2015 |
| | | | | BR | 112014020867 | A2 | 20 June 2017 |
| | | | | WO | 2013138782 | A1 | 19 September 2013 |
| | | | | CA | 2861503 | A1 | 19 September 2013 |
| | | | | NL | 2010448 | A | 18 September 2013 |
| | | | | TW | 201342841 | A | 16 October 2013 |
| | | | | HU | E043282 | T2 | 28 August 2019 |
| | | | | HU | E036770 | T2 | 28 August 2018 |
| | | | | SE | 1350307 | A1 | 17 September 2013 |
| | | | | EP | 2826171 | A1 | 21 January 2015 |
| | | | | EP | 2826267 | A1 | 21 January 2015 |
| | | | | MX | 2014011091 | A | 08 April 2015 |
| | | | | WO | 2013138332 | A1 | 19 September 2013 |
| | | | | US | 2013242818 | A1 | 19 September 2013 |
| | | | | US | 2016270104 | A1 | 15 September 2016 |
| | | | | JP | 2017184240 | A | 05 October 2017 |
| | | | | US | 2013244656 | A1 | 19 September 2013 |
| | | | | CN | 104396303 | A | 04 March 2015 |
| | | | | HU | E038863 | T2 | 28 December 2018 |
| | | | | WO | 2013138021 | A1 | 19 September 2013 |
| | | | | ES | 2656895 | T3 | 28 February 2018 |

Form PCT/ISA/210 (patent family annex) (January 2015)

**INTERNATIONAL SEARCH REPORT**
**Information on patent family members**

International application No.

**PCT/CN2021/131296**

| Patent document cited in search report | | | Publication date (day/month/year) | Patent family member(s) | | | Publication date (day/month/year) |
|---|---|---|---|---|---|---|---|
| CN | 103379648 | A | 30 October 2013 | CN | 103379648 | B | 09 March 2016 |
| CN | 112399589 | A | 23 February 2021 | WO | 2021032027 | A1 | 25 February 2021 |
| | | | | CN | 112399589 | B | 22 April 2022 |
| WO | 2021092959 | A1 | 20 May 2021 | WO | 2021092959 | A9 | 11 November 2021 |
| CN | 111836371 | A | 27 October 2020 | None | | | |
| US | 2013336242 | A1 | 19 December 2013 | WO | 2013191442 | A1 | 27 December 2013 |
| | | | | KR | 20130142939 | A | 30 December 2013 |
| | | | | EP | 2862294 | A1 | 22 April 2015 |
| | | | | US | 9185705 | B2 | 10 November 2015 |
| | | | | EP | 2862294 | A4 | 24 February 2016 |
| | | | | EP | 2862294 | B1 | 10 April 2019 |
| | | | | KR | 2097483 | B1 | 07 April 2020 |

Form PCT/ISA/210 (patent family annex) (January 2015)